# EUROPÄISCHE PATENTSCHRIFT

(11) **EP 3 268 173 B1**
(45) Veröffentlichungstag und Bekanntmachung des Hinweises auf die Patenterteilung: **31.03.2021**
(21) Anmeldenummer: 16710129.4
(22) Anmeldetag: 10.03.2016
(51) Int. Cl.: B26D 5/00, B26D 5/18, B26D 1/06, B26D 7/02, B29C 70/54, B29B 11/16, B29C 70/30, B26D 7/00

(54) **SCHNEIDEINHEIT MIT EINER KLINGE ZUM TRENNEN ZUMINDEST EINER FASER, INSBESONDERE ZUR HERSTELLUNG VON FASERVORFORMLINGEN**
CUTTING UNIT COMPRISING A BLADE FOR CUTTING AT LEAST ONE FIBRE, PARTICULARLY FOR PRODUCING FIBRE PREFORMS
UNITÉ DE COUPE COMPORTANT UNE LAME POUR COUPER AU MOINS UNE FIBRE, NOTAMMENT POUR LA FABRICATION D'ÉBAUCHES DE FIBRES

(30) Priorität: 12.03.2015 DE 102015204417
(43) Veröffentlichungstag der Anmeldung: 17.01.2018
(73) Patentinhaber: Voith Patent GmbH, 89522 Heidenheim (DE); Audi AG, 85045 Ingolstadt (DE)
(72) Erfinder: UFER, Jaromir, 80807 München (DE); KAISER, Michael, 85614 Kirchseeon (DE); BURKHARD, Manfred, 86911 Dießen / OT Dettenschwang (DE); GIERL, Sebastian, 81543 München (DE)
(74) Vertreter: Voith Patent GmbH - Patentabteilung
(86) Internationale Anmeldenummer: PCT/EP2016/055109
(87) Internationale Veröffentlichungsnummer: WO 2016/142457

(56) Entgegenhaltungen:
- EP-A1- 2 628 392
- DE-A1-102011 007 018
- GB-A- 2 470 021
- US-A1- 2007 193 051
- US-A1- 2012 234 150

## Beschreibung

Die Erfindung betrifft eine Schneideinheit mit einer Klinge zum Trennen zumindest einer Faser, insbesondere zur Herstellung von Faservorformlingen, die insbesondere eine Vorstufe bei einer Herstellung von faserverstärkten Kunststoff-Bauteilen darstellen. Außerdem betrifft die Erfindung eine Vorrichtung zur Herstellung von Faservorformlingen, die insbesondere eine Vorstufe bei einer Herstellung von faserverstärkten Kunststoff-Bauteilen darstellen.

DE 10 2011 007 018 A1 beschreibt in einem bevorzugten technischen Gebiet eine Vorrichtung zur Herstellung von Faservorformlingen, die insbesondere eine Vorstufe bei der Herstellung von faserverstärkten Kunststoff-Bauteilen darstellen. Zum Abtrennen von Fasern ist eine Trenneinrichtung genannt Eine Schneideinheit mit den Merkmalen des Oberbegriffs von Anspruch 1 ist bekannt aus der Schrift US 2007/193051 A1.

Bei einem Abtrennen von Fasern, insbesondere Faserbändern, werden in der Regel Schneidsysteme eingesetzt, deren Schneideinheit Fasern nach einem Scherenprinzip trennen. Außerdem gibt es Systeme mit einer Schneideinheit, die das Abtrennen mit Messern, die an einer Walze befestigt sind und in eine weiche Gegenwalze eindringen, durchführt. Wird ein wiederkehrender Schneidvorgang benötigt, bei dem zwischen Schneidvorgängen eine große Öffnung der Schneideinheit z.B. für ein Hindurchgreifen zum Transport eines Fasermaterials erforderlich ist, sind die bestehenden Systeme nur begrenzt einsetzbar. Insbesondere bei geringem Bauraum ist es technisch sehr aufwändig herkömmliche Schneidsysteme so zu gestalten, dass eine Schneideinheit, insbesondere deren Klinge ausreichend weit geöffnet werden kann.

Der Erfindung liegt daher die Aufgabe zugrunde, eine modifizierte Schneideinheit bereitzustellen, die insbesondere mit einer einfachen Kinematik einen zuverlässigen Schneidvorgang sowie eine ausreichend große Öffnung ermöglicht. Bereitgestellt werden soll außerdem eine Vorrichtung zur Herstellung von Faservorformlingen mit einer modifizierten Schneideinheit.

Die erfindungsgemäße Lösung ist durch die Merkmale des Anspruchs 1 bzw. 10 charakterisiert. Vorteilhafte Ausgestaltungen sind in den Unteransprüchen wiedergegeben.

Bevorzugt wird demgemäß eine Schneideinheit mit einer Klinge zum Trennen zumindest einer Faser insbesondere an einer Schneidunterlage, insbesondere zur Herstellung von Faservorformlingen, die insbesondere eine Vorstufe bei der Herstellung von faserverstärkten Kunststoff-Bauteilen darstellen, wobei eine Führungseinrichtung angeordnet ist, zumindest eines von der Klinge und einer relativ zu der Klinge bewegbaren Schneidunterlage zum Trennen längs einer linearen Bahn zu führen, und wobei die Klinge und/oder die Schneidunterlage mittels einer Antriebsanordnung gegenüber einem Befestigungspunkt verstellbar fixiert ist und die Führungseinrichtung eine zwischen dem Befestigungspunkt und der Klinge und/oder der Schneidunterlage verstellbare Komponente der Antriebsanordnung so längs einer Führungsbahn mit vorbestimmtem Bahnverlauf führt, dass die Klinge und/oder die Schneidunterlage nur längs der linearen Bahn verstellbar ist.

Eine erste Variante sieht somit vor, die Klinge zum Trennen der Faser längs einer linearen Bahn zu führen, wobei die Faser während des Trennvorgangs gegen eine Schneidunterlage gedrückt wird. Eine zweite Variante sieht vor, dass die Klinge insbesondere feststehend angeordnet ist und eine Schneidunterlage zum Trennen der Faser längs einer linearen Bahn gegen die Klinge geführt wird. Gemäß einer dritten Variante werden zum Trennen der Faser sowohl die Klinge als auch eine Schneidunterlage längs einer linearen Bahn aufeinander zu und gegeneinander geführt.

Insbesondere wird somit eine der beiden Komponenten Klinge und Schneidunterlage feststehend angeordnet oder es werden somit beide Komponenten längs einer gemeinsamen Bahn bewegt.

Die Schneideinheit ist bevorzugt auf das Schneiden von Verstärkungsfasern für die Herstellung von faserverstärkten Kunststoffbauteilen bzw. entsprechenden Preforms, d.h. Vorformen aus einem Faserverbundmaterial ausgelegt.

Ein Vorteil gegenüber Scheren oder Schneidwalzen ist, dass durch die lineare bzw. geradlinige Führung der Klinge insbesondere nebeneinander angeordnete Fasern nicht seitlich verschoben werden. Für die Festigkeit von CFK-Bauteilen (CFK: Kohlenstoff-faserverstärkter Kunststoff) ist die exakte Positionierung der Fasern sehr wichtig und wird vorteilhaft ermöglicht.

Die lineare Führung der Klinge ermöglicht außerdem eine Schneideinheit, die einen nur geringen Platzbedarf aufweist und so insbesondere zum Schneiden von Verstärkungsfasern in einer Vorrichtung für die Herstellung von faserverstärkten Kunststoffbauteilen bzw. entsprechenden Preforms, insbesondere Faserhalbzeugen vorteilhaft einsetzbar ist. Die lineare Führung lässt zudem einen großen Freiraum zwischen Klinge und Schneidunterlage zum Abholen der Faser bzw. eines Bandes zu. Der notwendige Bauraum für eine solche Schneideinheit ist zudem bezogen auf eine erzielbare Schneidkraft äußerst gering.

Unter Faser werden hier insbesondere auch mehrere zueinander benachbart angeordnete Fasern, Fasern aufweisende Faserbänder und Fasermaterialien verstanden. Insbesondere werden hier unter Faser auch Garne und sogenannte Rovings, d.h. ein Strang, Bündel oder Multifilamentgarn aus parallel angeordneten Filamenten bzw. Endlosfasern verstanden. Unter Faser werden dabei insbesondere auch Halbzeuge, thermoplastische oder duroplastische Prepregs verstanden. Das Schneid- bzw. Trennverfahren bzw. eine entsprechende Schneideinheit ist insbesondere auch in einem Roving-Applikator einsetzbar.

Eine bevorzugte Weiterbildung besteht darin, dass die lineare Bahn in einer Richtung zumindest im Wesentlichen quer zu einer Erstreckung der Schneidunterlage oder einer Schneidkante der Klinge führt.

Insbesondere erstreckt sich die Schneidkante so quer oder im Wesentlichen quer zu der linearen Bahn, dass die Schneidkante mit Ihrer Längserstreckung durch die Faser und gegen und/oder in die Schneidunterlage gedrückt wird.

Insbesondere erstreckt sich die lineare Bahn zumindest im Wesentlichen senkrecht zu einer durch die Schneidunterlage aufgespannten Ebene. Die Trenn- bzw. Schneidkante der Klinge wird so zum Trennen insbesondere quer bzw. senkrecht zur Längserstreckung einer durch das Trennen zu durchtrennenden Faser auf die Faser zu geführt. Im Fall einer waagerecht auf der Schneidunterlage angeordneten Faser wird die Klinge somit von oben oder unten her gegen die Faser gedrückt.

Zumindest im Wesentlichen quer bedeutet, dass nicht nur eine Führung quer zur Schneidunterlage, sondern ggfs. auch eine Abweichung von einigen Winkelgraden, insbesondere bis zu 5°, insbesondere bis zu 10° tolerierbar ist. Ein schräger Abschnitt des Bandes ist in Bezug auf Verschnitt vorteilhaft. Ein schräger Schnitt von oben bzw. in Schneid-Längsrichtung mit einer solchen Abweichung kann aus bauraumtechnischen Gründen vorteilhaft sein.

Eine bevorzugte Weiterbildung besteht darin, dass die Schneidunterlage aus einem weichen Material ausgebildet ist oder zumindest eine weiche Oberfläche aufweist.

Die Gegenseite der Klinge stellt somit eine weiche Schneidunterlage, z.B. ein PU-Material (PU: Polyurethane) dar. Eine weiche bzw. nachgiebige Oberfläche ermöglicht ein Schneidprinzip mit der Klinge auf weicher Unterlage, wobei die Klinge oder deren Schneidkante aus einem relativ zur Unterlage starreren Befestigungspunkt ist dabei z.B. ein Rahmen einer Vorrichtung, in der die Schneideinheit eingesetzt ist, insbesondere ein ortsfester Bestandteil einer Vorrichtung für die Herstellung von faserverstärkten Kunststoffbauteilen bzw. entsprechenden Preforms. Die verstellbare Komponente ist insbesondere ein die Klinge antreibendes starres Gestängeelement, ein relativ zum Befestigungspunkt verstellbares weiteres Gelenk oder die Klinge bzw. eine Klingenhalterung.

Die Führungsbahn kann einen linearen Verlauf haben, wenn beispielsweise die Klinge oder ein Gelenk an der Klinge oder deren Klingenhalterung durch die Führungseinrichtung geführt wird. Insbesondere können in einem solchen Fall Führungsbahn und lineare Bahn zusammenfallen. Die Führungsbahn kann aber auch einen nicht-linearen, z.B. bogenförmigen Verlauf haben, wenn beispielsweise eine von dem Gelenk an der Klinge beabstandete verstellbare Komponente durch die Führungseinrichtung geführt wird.

Eine bevorzugte Weiterbildung besteht darin, dass die verstellbare Komponente Bestandteil einer Hebelanordnung, insbesondere Kniehebelanordnung ist.

Eine Hebelanordnung bietet als indirekter Antrieb eine Kraftumlenkung und ermöglicht so einen besonders geringen Bauraumbedarf. Eine dafür bevorzugte Hebelanordnung weist eine Gestänge- und Gelenkanordnung aus starren Gestängeelementen und diese verbindenden Gelenken auf, wobei zumindest ein Gestängeelement oder Gelenk die verstellbare Komponente ausbildet. Die insbesondere zwei Gestängeelemente sind durch ein Gelenk gelenkig miteinander Eine Hebelanordnung bietet als indirekter Antrieb eine Kraftumlenkung und ermöglicht so einen besonders geringen Bauraumbedarf. Eine dafür bevorzugte Hebelanordnung weist eine Gestänge- und Gelenkanordnung aus starren Gestängeelementen und diese verbindenden Gelenken auf, wobei zumindest ein Gestängeelement oder Gelenk die verstellbare Komponente ausbildet. Die insbesondere zwei Gestängeelemente sind durch ein Gelenk gelenkig miteinander verbunden. Ein Antrieb, z.B. ein Zylinderantrieb, z.B. Pneumatikzylinder ist an insbesondere einem der Gelenke so angeordnet, dass die Komponenten der Kniehebelanordnung mittels des Antriebs relativ zueinander verstellbar sind. Bei einer dafür bevorzugten Kniehebelanordnung ist ein Gelenk an einem Befestigungspunkt befestigt und ein Gelenk der Klinge zugeordnet, insbesondere an der Klinge oder einer Klingenhalterung gelenkig befestigt.

Die Führungseinrichtung ist dabei beispielsweise eine Führungseinheit mit einer Führungsbahn, die eines der Gelenke oder die Klinge oder deren Klingenhalterung längs eines vorbestimmten Bahnverlaufs führt. Im Fall der insbesondere seitlichen Führung des Gelenks an der Klinge, der Klinge oder der Klingenhalterung verläuft die Führungsbahn insbesondere linear, um eine lineare Klingenbahn zu bewirken. Im Fall der insbesondere seitlichen Führung eines Gelenks, das zwischen Gestängeelementen angeordnet ist, verläuft die Führungsbahn bevorzugt nicht-linear, um eine lineare Klingenbahn zu bewirken.

Insbesondere ein solches Kniehebelprinzip ermöglicht eine sehr kompakte und leichte Bauweise in Bezug auf die erreichbare Schneidkraft. So kann besonders bevorzugt eine Öffnungsbewegung schnell und mit wenig Kraftaufwand durchgeführt werden, während eine Schneidbewegung langsam mit viel Kraftaufwand durchführbar ist.

Insbesondere eine mittige und gelenkig gelagerte Anbindung der Klinge ermöglicht eine gleichmäßige Schneidkraftverteilung der Klinge auf Schneidunterlage. Selbst bei leicht ausweichender Unterlage z.B. aufgrund von begrenzter Steifigkeit wird ein prozesssicherer Schnitt ermöglicht. Dies hält zudem einen Toleranzanspruch an eine Führung bzw. die Führungseinrichtung besonders gering.

Eine bevorzugte Weiterbildung besteht darin, dass die verstellbare Komponente ein gegenüber dem Befestigungspunkt verstellbares Antriebselement eines Antriebs ist, der die Klinge und/oder die Schneidunterlage gegenüber dem Befestigungspunkt direkt antreibt.

Ein solcher Antrieb ist beispielsweise ein an einem insbesondere ortsfesten Rahmen der Schneideinheit befestigter Antriebszylinder oder Motor, z.B. Kurbeltrieb, wobei der Antriebszylinder oder Motor beispielsweise mittels seines verstellbaren Antriebselements direkt oder über ein Gelenk an der Klinge oder deren Klingenhalterung befestigt ist.

Die Führungseinrichtung ist dabei beispielsweise wieder eine Führungseinheit mit einer Führungsbahn, die eines der Gelenke oder die Klinge oder deren Klingenhalterung längs einem vorbestimmten Bahnverlauf führt. Im Fall eines die Klinge mit seinem Kolbengestänge direkt antreibenden Zylinders ist die Führungseinrichtung optional durch die Zylinderanordnung selber ausbildbar.

Eine bevorzugte Weiterbildung besteht darin, dass die Klinge und/oder die Schneidunterlage mittels einer Schwung-Antriebseinrichtung verstellbar ist.

Eine Schwung-Antriebseinrichtung ist beispielsweise ein Kurbeltrieb oder ein sonstiger Antrieb mit zwischen diesem und der Klinge einem Getriebe oder gelenkig verbundenen Gestänge in einer Ausgestaltung, die die Klinge während der Bewegung zum Trennen beschleunigt. Durch ein solches Schwungprinzip wird die Klinge beschleunigt und hackt die Faser ab.

Eine bevorzugte Weiterbildung besteht darin, dass die Klinge und/oder die Schneidunterlage mittels einer Impuls-Antriebseinrichtung verstellbar ist.

Eine Impuls-Antriebseinrichtung ist beispielsweise ein Antrieb mit zwischen diesem und der Klinge einem Getriebe oder gelenkig verbundenen Gestänge in einer Ausgestaltung, die die Klinge während der Bewegung zum Trennen auf dem Material abgelegt und durch einen auf die Klinge wirkenden Impuls bzw. Schlag die Faser trennt.
Eine bevorzugte Weiterbildung besteht darin, dass eine Halteeinrichtung an der Schneideinheit, insbesondere an einer die Klinge und/oder die Schneidunterlage verstellenden Komponente angeordnet ist, während des Trennens eine zu durchtrennende Faser benachbart zu der Klinge und/oder der Schneidunterlage halten.

Dadurch kann die Faser während des Trennvorgangs insbesondere hinter der Schneideinheit gehalten werden. Dies ist insbesondere durch einen Greifer zusätzlichen zu dem die Faser haltenden Greifer oder durch eine kombinierte Mechanik, die an der Schneideinheit angeschlossen ist, ausgestaltbar. Insbesondere kann eine solche Mechanik als Halteelement einen gefederten Niederhalter aufweisen.

Eine bevorzugte Weiterbildung besteht darin, dass eine Halteeinrichtung an der Schneideinheit angeordnet ist, eine zu durchtrennende Faser während des Trennens und nach dem Trennen in einer definierten Lage zu halten.

Die definierte Lage dient dazu, die Faser während eines insbesondere nachfolgenden Abholvorganges in einer definierten Lage zu halten. Dazu sind als Halteeinrichtung insbesondere rückstellende Elemente wie z.B. dünne Federbleche als Halteelement in der Schneideinheit oder dieser benachbart einsetzbar. Insbesondere hält die Halteeinrichtung die Faser in der definierten Lage an der Schneidunterlage oder einer dieser benachbarten Komponente fest.

Insbesondere vorstehende Ausführungen zu einer verstellbaren Klinge gelten entsprechend auch für eine dementsprechend verstellbare Schneidunterlage.

Bevorzugt wird außerdem eine Vorrichtung zur Herstellung von Faservorformlingen, die insbesondere eine Vorstufe bei der Herstellung von faserverstärkten Kunststoff-Bauteilen darstellen, wobei die Vorrichtung zumindest eine Abwickelstation und zumindest eine Garnübergabestelle für die Bereitstellung zumindest einer Faser und zumindest einen Greifer, der einzelne oder mehrere Fasern an seinem Anfang greifen kann, und zumindest eine Trenneinrichtung zum Trennen der zumindest einen Faser aufweist, wobei die zumindest eine Trenneinrichtung zumindest eine solche Schneideinheit ist oder aufweist.

Bevorzugt sind die Schneideinheiten in Vorrichtungen zur Herstellung von Faservorformlingen zwischen Greifer und Ablegetisch bzw. Formwerkzeug angeordnet.

Eine bevorzugte Weiterbildung besteht darin, dass die Vorrichtung mehrere solche Abwickelstationen für die Bereitstellung mehrerer Fasern, insbesondere Garne oder Rovings und mehrere Greifer, die jeweils einzelne oder mehrere Garne oder Rovings an ihrem Anfang greifen können, aufweist, wobei jeder Greifer auf einem Pfad zwischen einer Maximalposition und einer Abholposition hin und her bewegbar ist, wobei die Abholposition an einer Garnübergabestelle vorgesehen ist und näher an der Abwickelstation ist als die Maximalposition, wobei jeder Greifer eine eigene Maximalposition hat und einer eigenen Garnübergabestelle zugeordnet ist und wobei die Greifer jeweils einzeln auf im Wesentlichen zueinander parallelen Pfaden bewegbar sind.

Eingesetzt werden bzw. sind eine oder mehrere solcher Schneideinheiten besonders bevorzugt in einer Vorrichtung, wie sie beispielsweise in DE 10 2011 007 018 A1 beschrieben ist. Deren Trenneinrichtung wird dabei durch eine bzw. mehrere solcher Schneideinheiten ausgebildet.

Eine bevorzugte Weiterbildung besteht darin, dass die zumindest eine Schneideinheit zum Trennen der zumindest einen Faser, Garne oder Rovings zwischen einem Formwerkzeug und dem zumindest einen Greifer angeordnet ist und/oder die zumindest eine Schneideinheit zum Trennen der zumindest einen Faser, Garne oder Rovings zwischen einem Formwerkzeug und der zumindest einen Garnübergabestelle angeordnet ist.

Als Antrieb können neben beispielhaft genannten Pneumatikzylindern auch andere Antriebsformen eingesetzt werden, welche z.B. hydraulisch, elektrisch oder elektromagnetisch betrieben werden.

Vorteilhaft ist eine solche Schneideinheit bzw. eine Vorrichtung mit einer solchen Schneideinheit im Vergleich zum Scherenprinzip durch den wesentlich geringeren Bauraum und durch den Schnitt quer durch die Faser gegen die Schneidunterlage, was ein verschieben und ggfs. zusammendrücken zueinander benachbarter Fasern bevorzugt vermeidet. Im Vergleich zum Schneidprinzip einer Guillotine sind die Anforderungen an eine Führung der Schneiden sehr gering, da ein Schneidspalt vermieden wird, der bei Fasermaterial nicht tolerierbar wäre. Dadurch ergibt sich demgegenüber eine leichte und baulich klein dimensionierte Größe der Schneideinheit. Im Vergleich zu einem Rollmesser sind die Anforderungen an den erforderlichen Bauraum problemlos erfüllbar.

Die erfindungsgemäße Lösung wird nachfolgend anhand von Figuren erläutert. Darin ist im Einzelnen folgendes dargestellt:
- Figur 1: zeigt in schematisiert vereinfachter Darstellung den Grundaufbau einer Schneideinheit zum Trennen einer Faser in teilweise geschnittener Ansicht während einer ersten Betriebsstellung,
- Figur 2: zeigt den Grundaufbau in einer gegenüber Figur 1 weiteren seitlichen Ansicht während einer zweiten Betriebsstellung,
- Figur 3: zeigt in schematisiert vereinfachter Darstellung einen Grundaufbau einer Vorrichtung zur Herstellung von Faservorformlingen, die insbesondere eine Vorstufe bei der Herstellung von faserverstärkten Kunststoff-Bauteilen darstellen, in seitlicher Ansicht,
- Figur 4: zeigt den Grundaufbau der Vorrichtung aus Figur 3 in Draufsicht,
- Figur 5: zeigt in schematisiert vereinfachter Darstellung einen gegenüber Figur 1 modifizierten Grundaufbau einer Schneideinheit zum Trennen einer Faser in teilweise geschnittener Ansicht während einer ersten Betriebsstellung und
- Figur 6: zeigt schematisiert einen Ausschnitt eines Grundaufbaus gemäß Figur 2 mit einer modifizierten Schneidunterlage.

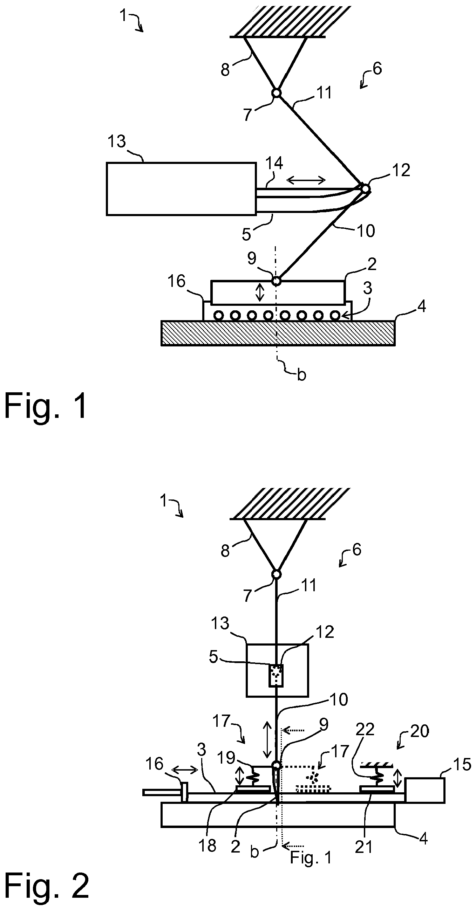

Figuren 1 und 2 zeigen eine Schneideinheit 1 mit einer Klinge 2 zum Trennen einer Faser 3 oder einer Vielzahl von solchen Fasern 3. Figur 1 zeigt eine erste Betriebsstellung vor dem Trennen mit der Klinge 2 oberhalb der Faser 3. Figur 2 zeigt eine zweite Betriebsstellung während oder nach dem Trennen mit der Klinge 2 in der Faser 3.

Unterhalb der Klinge 2 ist eine Schneidunterlage 4 angeordnet. Die Schneidunterlage 4 erstreckt sich in einer Ebene, welche parallel oder im Wesentlichen parallel zu einer Schneidkante der Klinge 2 angeordnet ist. Zum Durchtrennen der Fasern 3 ist die Klinge 2 längs einer linearen Bahn b verstellbar angeordnet. Die lineare Bahn b verläuft quer oder im Wesentlichen quer zur Längserstreckung der Schneidkante bzw. senkrecht oder im Wesentlichen senkrecht zur Erstreckung der Ebene der Schneidunterlage 4.

Die Schneideinheit 1 weist einen Befestigungspunkt 8, insbesondere einen gegenüber der Schneidunterlage 4 und/oder gegenüber einem Rahmen ortsfesten Fixpunkt auf. Die Klinge 2 ist mittels einer Antriebsanordnung verstellbar gegenüber dem Befestigungspunkt 8 gelagert.

Beispielhaft ist als Antriebsanordnung eine Hebelanordnung, insbesondere Kniehebelanordnung 6 dargestellt. Diese besteht aus einem Gelenk 7, über das ein Gestängeelement 11 gelenkig mit dem Befestigungspunkt 8 verbunden ist. Mit dem gegenüberliegenden Ende des Gestängeelements 11 ist über ein weiteres Gelenk 12 ein weiteres Gestängeelement 10 gelenkig verbunden. Mit dem gegenüberliegenden Ende des weiteren Gestängeelements 10 ist über ein noch weiteres Gelenk 9 die Klinge 2 gelenkig verbunden.

Eine Führungseinrichtung 5 ist an der Schneideinheit 1 im Bereich der Antriebsanordnung so angeordnet, dass eine Verstellung der Komponenten der Antriebsanordnung, das heißt insbesondere der Gelenke 7, 9, 12 und der Gestängeelemente 10, 11 nur so möglich ist, dass die Klinge 2 insbesondere nur längs der linearen Bahn b verstellbar ist.

Bei der dargestellten Kniehebelanordnung 6 weist die Führungseinrichtung 5 eine Führungsbahn auf, welche beispielsweise einen Bolzen führt, der seitlich im Bereich des mittleren Gelenks 12 absteht. Die Führungsbahn weist in diesem Fall einen nicht-linearen, insbesondere bogenförmigen Verlauf auf.

Die Schneideinheit 1 weist außerdem einen Antrieb 13 auf, der beispielsweise als Pneumatikzylinder ausgebildet ist. Ein durch den Antrieb 13 verstellbar antreibbares Gestänge 14 ist mit dem mittleren Gelenk 12 so verbunden, dass über die Kniehebelanordnung 6 mittels des Antriebs 13 die Klinge 2 mit ihrer Schneidkante in Richtung der Schneidunterlage 4 bzw. in entgegengesetzter Richtung verstellbar ist.

Mittels des Kniehebelprinzips kann besonders bevorzugt eine Öffnungsbewegung schnell und mit wenig Kraftaufwand durchgeführt werden, während eine Schneidbewegung langsam mit viel Kraftaufwand durchführbar ist. Gemäß einem bevorzugten Steuerverfahren wird der Antrieb 13 entsprechend so angesteuert, dass eine Öffnungsbewegung, das heißt eine Verstellung der Klinge 2 von der Schneidunterlage 4 weg, schnell angesteuert wird, während eine Schneidbewegung in entgegengesetzter Richtung langsam angesteuert wird.

Zum Transportieren der Faser 3 dient ein Greifer 16.

Figur 2 zeigt zusätzlich eine Garn-Abholstelle 15, die insbesondere eine Abwickelstation und eine Garnübergabestelle zum Bereitstellen zumindest einer solcher Faser 3 aufweist. Gegenüberliegend ist der Greifer 16 skizziert, welcher in und entgegen der Richtung zur Garn-Abholstelle 15 verstellbar ist und ausgebildet ist, an der Garnübergabestelle zumindest eine Faser 3 aufzunehmen und über einen Arbeitsbereich zu ziehen. Dabei befindet sich die Schneideinheit 1 so über dem Arbeitsbereich, dass mit der Klinge 2 die zumindest eine Faser 3 durchtrennbar ist.

Skizziert ist außerdem eine Halteeinrichtung 17, die ausgestaltet ist, während des Durchtrennens die Faser 3 mit einem Halteelement 18 der Klinge 2 benachbart zu halten. Gestrichelt ist eine weitere beispielhafte Position der Halteeinrichtung 17 skizziert. Beispielhaft ist das Halteelement 18 mittels einer insbesondere elastischen Verbindungsmechanik 19 mit einer Komponente verbunden, welche die Klinge 2 verstellt. Bevor die Klinge 2 die Faser 3 erreicht, spannt das Halteelement 18 die Faser 3 gegen die Schneidunterlage 4. Aufgrund der Elastizität der Verbindungsmechanik 19 kann die Klinge 2 weiter in Richtung der Schneidunterlage 4 verstellt werden, um die Faser 3 zu durchtrennen.

Bevorzugt ist die Schneidunterlage 4 aus einem weichen oder elastischen Material ausgebildet und ermöglicht, dass die Schneidkante der Klinge 2 die Oberfläche der Schneidunterlage 4 etwas eindrückt oder in die Oberfläche der Schneidunterlage 4 etwas eindringt.

Skizziert ist außerdem eine weitere Halteeinrichtung 20, die die zumindest eine Faser 3 für einen Abholvorgang insbesondere der Garn-Abholstelle 15 benachbart hält. Ein Halteelement 21 ist mittels einer insbesondere elastischen Verbindungsmechanik 22 an oder gegenüber dem Arbeitsbereich und/oder der Schneidunterlage 4 so befestigt, dass die zumindest eine Faser 3 ausreichend fest gehalten werden kann.

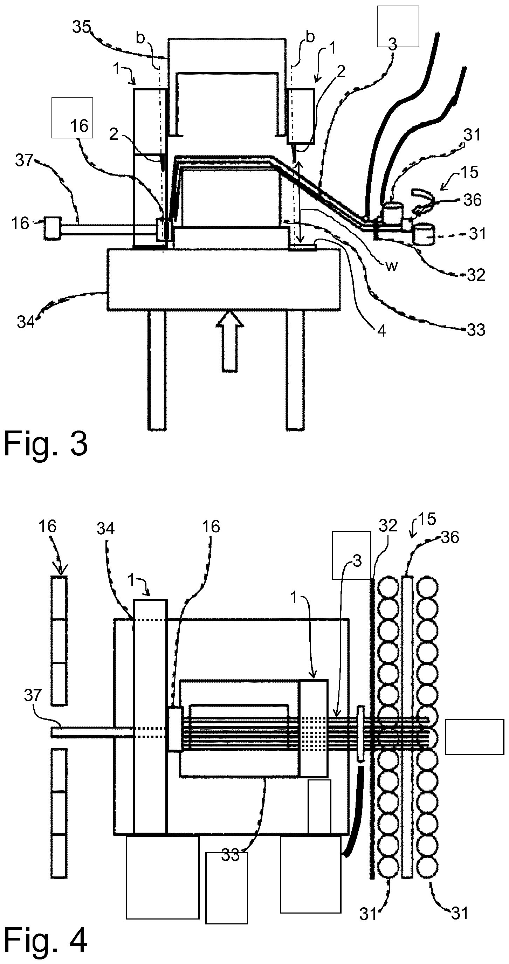

Figuren 3 und 4 zeigen eine Vorrichtung 30 zur Herstellung von Faservorformlingen, die insbesondere eine Vorstufe bei der Herstellung von faserverstärkten Kunststoff-Bauteilen darstellen, gemäß DE 10 2011 007 018 A1. Soweit Komponenten und Funktionen, insbesondere auch anhand Bezugszeichen verwendet werden, die zu Figur 1 oder 2 beschrieben sind, gelten in Figur 3 und 4 entsprechende Ausführungen hinsichtlich der Komponenten und Funktionen.

Die Bereitstellung der Fasern 3, insbesondere Garne oder Rovings erfolgt über eine Vielzahl von Abwickelstationen 31, in denen das Fasermaterial in Form von Spulen oder Garnknäuel (sogenannte Bobbins) bereitgestellt wird. Die Abwickelstationen 31 sind in mehreren Reihen nebeneinander, hintereinander oder übereinander angeordnet. Die Anfänge der Fasern 3 sind nur im jeweils benutzten Bereich für die benutzten Abwickelstationen 31 schematisch dargestellt. Diese alle anderen Anfänge von Fasern 3 werden zu entsprechenden Garnübergabestellen 32 eingefädelt, so dass sie von den zugehörigen Greifern 16 in zugeordneten Abholpositionen erfasst werden können. Eine solche Anordnung wird zusammen auch als Spulengatter bezeichnet.

Auf der anderen Seite sind die Greifer 16 abgesehen von einem Greifer 16 in ihren Maximalpositionen, die in diesem Fall auch den Ausgangspositionen entsprechen, dargestellt. Auch wenn nur gleich breite Greifer 16 dargestellt sind, so sind auch Greifer 16 mit unterschiedlichen Breiten möglich, die insbesondere eine entsprechend andere Anzahl an Fasern 3 greifen können. Die Greifer 16 müssen auch nicht unbedingt ihre Maximal- und Abholpositionen in einer Linie haben. Weiterhin sind ein erstes Formwerkzeug 33 auf einem Tisch, insbesondere Hubtisch 34 und ein zweites Formwerkzeug 35, das als Haube ausgeführt ist, in Abfahrposition also außerhalb der Pfade der Greifer 16 dargestellt. Das zweite Formwerkzeug 35 ist in Figur 4 nicht dargestellt. Eine entsprechende Bewegungs- oder Absenkeinrichtung für das zweite Formwerkzeug 35 ist auch nicht dargestellt. Weiterhin gibt es einen Bindermaterialvorrat 36, der beispielsweise zwischen den Reihen der Abwickelstationen 31 angeordnet ist.
Einer der Greifer 16 befindet sich in Abholposition und holt die seiner Anordnung in der Vorrichtung entsprechenden Fasern 3, indem er deren Anfänge greift. Der Greifer 16 ist durch eine Führungsvorrichtung 37, z. B. ein Gestänge oder einen Kolben, verschiebbar. Die Greifer 16 sind einzeln, aber insbesondere nur linear und auf parallelen Pfaden nebeneinander zwischen Abhol- und Maximalposition bewegbar. Dies ermöglicht eine einfache Automatisierung und eine schnelle parallele Bewegung. Es können wie dargestellt mehrere Abwickelstationen 31 zu einer Gruppe zusammengefasst und einem Greifer 16 zugeordnet werden. Bevorzugt gibt es mindestens so viele Abwickelstationen 31 wie Greifer 16.

Zusammen mit den Fasern 3, insbesondere Garnen oder Rovings kann auch Bindermaterial 18, beispielsweise in Form von Binderfäden oder Bindervliesen, vom Greifer 16 mit aufgespannt werden.

Dargestellt ist die Vorrichtung nach einem ersten Drapierschritt einer ersten Lage aus Fasern 3 bzw. Garnen oder Rovings. Vom Hubtisch 34 wurde das erste Formwerkzeug 33 in die Drapierposition bewegt. Dadurch werden die Fasern 3 ausgelenkt und über das Formwerkzeug 33 drapiert. Der Greifer 16 fixiert die Anfänge der Fasern 3 nahe der Außenkontur des Formwerkzeuges 33. Nach diesem Schritt kann alternativ oder zusätzlich Bindermaterial auf die Fasern 3 aufgebracht oder aufgesprüht werden. Im nächsten Schritt werden die Fasern 3 mithilfe des zweiten Formwerkzeuges 35, das in seine Drapierposition bewegt wurde, weiter drapiert bzw. umgeformt. Durch das Zusammenwirken der beiden Formwerkzeuge 33, 35, zwischen denen sich die Lage an Fasern 3 befindet, ist eine genaue Formgebung möglich.

Gleichzeitig mit oder nach einem Fixieren werden die Fasern 3 an beiden Seiten der Formwerkzeuge mittels einer Trenneinrichtung abgetrennt, also zwischen Greifer 16 und Formwerkzeug 33 bzw. 35 und zwischen Garnübergabestellen 32 und Formwerkzeug 33 bzw. 35. In einer Ausführungsform ist die Trenneinrichtung mit dem ersten oder zweiten Formwerkzeug verbindbar. Vorteilhaft ist es, wenn die Trennung zumindest auf der Seite der Garnübergabestellen 32 nahe am Formwerkzeug 33 erfolgt. Dadurch fällt wenig Verschnitt an teurem Fasermaterial an und es ist weniger Nachbearbeitung des Faservorformlings erforderlich.

In dieser Vorrichtung 30 sind als Trenneinrichtungen beispielhaft zwei hier beschriebene Schneideinheiten 1 insbesondere gemäß Figur 1 und 2 eingesetzt. Die linksseitig skizzierte der Schneideinheiten 1 ist z.B. an dem Hubtisch 34 befestigt. Die rechtsseitig skizzierte der Schneideinheiten 1 ist z.B. an dem oberen Formwerkzeug 35 befestigt. Erkennbar ist in Figur 3 eine große Öffnungsweite w bzw. Hubhöhe zwischen der Klinge 2 und der Schneidunterlage 4 bei zugleich geringer seitlicher Erstreckung und geringer Bauhöhe der Schneideinheit 1.

Die abgetrennten Fasern 3 können über eine Rückspuleinrichtung wieder zurückgezogen und aufgewickelt oder über entsprechende Garnführung zwischengespeichert werden. Das Rückspulen erfolgt so, dass wieder Anfänge der Fasern 3 im Bereich der Garnübergabestellen 32 so zu liegen kommen, dass sie von den Greifern 16 abgeholt werden können, ohne dass allzu viel Verschnittmaterial anfällt. Zur Erfassung der Anfänge können Sensoren eingesetzt werden. Anstelle oder zusätzlich zu solchen Rückspuleinrichtungen ist auch die Halteeinrichtung 20 für den Abholvorgang aus Figur 1 und 2 einsetzbar.

Durchführbar wird mit einer solchen Vorrichtung insbesondere auch ein Verfahren zur Herstellung von Faservorformlingen, die beispielsweise eine Vorstufe bei der Herstellung von faserverstärkten Kunststoff-Bauteilen darstellen, welches folgende Verfahrensschritte aufweist: Spannen von Fasern 3, insbesondere Garnen oder Rovings, Drapieren der Fasern 3 über ein Formwerkzeug 33, Fixieren der drapierten Fasern 3 zu einem Faservorformling, wobei mehrere separate Greifer 16 an mehreren jeweils den einzelnen Greifern 16 zugeordneten Garnübergabestellen 32 einzelne oder mehrerer Fasern 3 greifen, wobei die Greifer 16 dann zueinander auf im Wesentlichen parallelen Pfaden bewegt werden und wobei die Fasern 3 dadurch nebeneinander aufgespannt werden. Nach einem Fixieren der Fasern 3 mittels eines daran angesetzten weiteren Formwerkzeugs 35 werden die seitlich abstehenden Fasern 3 zwischen Formwerkzeug 33 bzw. 35 und Greifer 16 und/ oder zwischen Formwerkzeug 33 bzw. 35 und Garnübergabestelle 32 durchtrennt.

Eine beispielhafte Modifikation sieht vor, dass die Führungseinrichtung 5 feststehend in der Anordnung und die Klinge in einer zwangsführenden Führung eingerichtet sind. In einem solchen Fall reicht eine feste Führung des Gelenks 12 in der Führungsbahn 5. In Figur 1 zeichnerisch darüber angeordnete Komponenten, wie der Befestigungspunkt 8, das Gestänge 11 und das Gelenk 7, können entfallen. Weitere Modifikationen können eine andere Komponente oder zwei noch andere Komponenten als fixe Befestigungspunkte vorsehen.

Gemäß unterschiedlichen Ausgestaltungen bewegt sich nur die Schneidunterlage auf die Faser und die Klinge zu oder es bewegt sich nur die Klinge auf die Faser zu oder es bewegen sich beide, d.h. Klinge und Schneidunterlage aufeinander und dabei beide auch auf die dazwischen befindliche Faser zu.

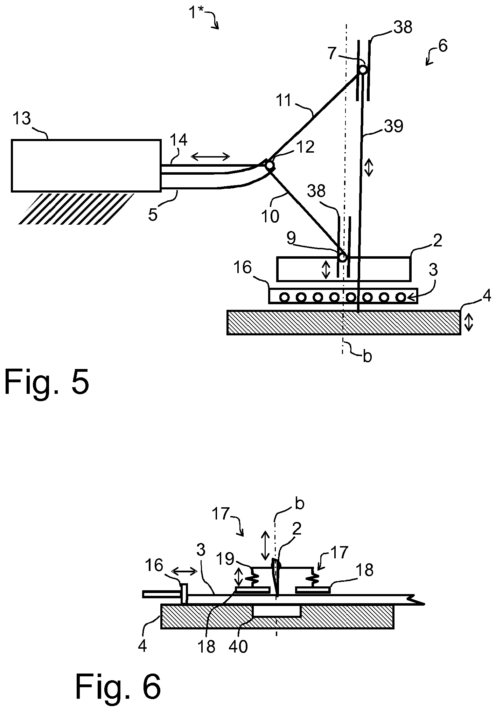

Figur 5 zeigt in schematisiert vereinfachter Darstellung einen gegenüber Figur 1 modifizierten Grundaufbau einer Schneideinheit 1* zum Trennen einer Faser in teilweise geschnittener Ansicht während einer ersten Betriebsstellung. Nachfolgend werden unter Verweis auf die Ausführungen zu Figur 1 insbesondere Unterschiede gegenüber Figur 1 beschrieben.

Beispielhaft sind der Antrieb 13 und die Führungseinrichtung 5 feststehend in der Gesamtanordnung angeordnet. Die Klinge 2 ist in einer zwangsführenden Führung 38 geführt.

Die aus Sicht der Klinge 2 jenseits des Gelenks 12 angeordneten Komponenten wie der Befestigungspunkt 8, das Gestänge 11 und das Gelenk 7 sind mit einem weiteren Gestänge 39 zum Verstellen der Schneidunterlage 4 so angeordnet, dass sich die Klinge 2 und die Schneidunterlage 4 längs der linearen Bahn b reziprok, d.h. aufeinander zu bzw. voneinander weg bewegen. Unter längs der linearen Bahn b bewegen wird dabei wieder verstanden, dass sich die Klinge 2 mit ihrer Schneidkante quer oder im Wesentlichen quer zur Faser 3 bewegbar geführt ist und die Schneidunterlage 4 mit ihrer insbesondere zur Schneidkante der Klinge 2 parallelen Erstreckung quer oder im Wesentlichen quer zur Faser 3 bewegbar geführt ist.

Beispielsweise ist das Gestänge 39 an dem Gelenk 7 befestigt und erstreckt sich längs bzw. implizit auch parallel zur linearen Bahn b zu der Schneidunterlage 4, an der das Gestänge 39 mit insbesondere seinem gegenüberliegenden Ende fest oder gelenkig befestigt ist. Bevorzugt ist dabei das Gelenk 37 oder die Schneidunterlage 4 in einer weiteren Führung 38 geführt, wobei die Führung 38 das weitere Gestänge 39 und/oder die Schneidunterlage 4 längs der linearen Bahn b führt.

Figur 6 zeigt schematisiert einen Ausschnitt eines Grundaufbaus gemäß Figur 2 mit einer modifizierten Schneidunterlage 4. In der Schneidunterlage 4 ist eine Aussparung 40 ausgebildet. Die Aussparung 40 führt in dem Bereich in die Schneidunterlage 4 hinein, in dem die Klinge 2 beim Trennen auf die obere Ebene der Schneidunterlage 4 trifft.

Um die Faser 3 durchtrennen zu können, sind insbesondere zwei Halteelemente 18 zum Spannen der Faser 3 gegen eine der Aussparung 40 benachbarte Oberfläche der Schneidunterlage 4 angeordnet. Insbesondere sind solche Halteelemente 18 mittels einer oder jeweils einer Halteeinrichtung 17 elastisch mit der Klinge 2 oder über eine oder jeweils eine insbesondere elastische Verbindungsmechanik 19 mit der Klinge 2 verbunden. Die Klinge 2 ist zwischen den Halteelementen 18 durch die Faser 3 führbar.

Weitere Modifikationen sehen insbesondere Kombinationen der vorstehend alternativ beschriebenen Ausgestaltungselemente vor. So können z.B. die Halteeinrichtungen alternativ oder zusätzlich an der insbesondere längs der Bahn verstellbaren Schneidunterlage angeordnet sein.

### Bezugszeichenliste:

- 1; 1*: Schneideinheit
- 2: Klinge
- 3: Faser
- 4: Schneidunterlage
- 5: Führungseinrichtung
- 6: Antriebsanordnung, insbesondere Kniehebelanordnung
- 7: Gelenk
- 8: Befestigungspunkt
- 9: Gelenk
- 10: Gestänge
- 11: Gestänge
- 12: Gelenk
- 13: Antrieb
- 14: Gestänge
- 15: Garnabholstelle, insbesondere Abwickelstation
- 16: Greifer, verstellbar antreibbar
- 17: Halteeinrichtung
- 18: Halteelement
- 19: Verbindungsmechanik
- 20: Halteeinrichtung
- 21: Halteelement
- 22: Verbindungsmechanik
- 30: Vorrichtung zur Herstellung von Faservorformlingen
- 31: Abwickelstationen
- 32: Garnübergabestellen
- 33: erstes Formwerkzeug
- 34: Hubtisch
- 36: Bindermaterialvorrat
- 37: Führungsvorrichtung
- 38: Führungen
- 39: Gestänge an Schneidunterlage
- 40: Aussparung
- b: lineare Bahn
- w: Öffnungsweite bzw. Hubhöhe der Klinge

## Patentansprüche

1. Schneideinheit (1; 1*) mit einer Klinge (2) zum Trennen zumindest einer Faser (3), insbesondere zur Herstellung von Faservorformlingen, die insbesondere eine Vorstufe bei der Herstellung von faserverstärkten Kunststoff-Bauteilen darstellen, weiterhin umfassend eine Führungseinrichtung und eine Schneidunterlage, wobei
die Führungseinrichtung (5) angeordnet ist, zumindest eines von der Klinge (2) und der relativ zu der Klinge (2) bewegbaren Schneidunterlage (4) zum Trennen längs einer linearen Bahn (b) zu führen,
**dadurch gekennzeichnet,**
**dass** die Klinge (2) und/oder die Schneidunterlage (4) mittels einer Antriebsanordnung gegenüber einem Befestigungspunkt (8) verstellbar fixiert ist und die Führungseinrichtung (5) eine zwischen dem Befestigungspunkt (8) und der Klinge (2) und/oder der Schneidunterlage (4) verstellbare Komponente der Antriebsanordnung so längs einer Führungsbahn mit vorbestimmtem Bahnverlauf führt, dass die Klinge (2) und/oder die Schneidunterlage (4) nur längs der linearen Bahn (b) verstellbar ist.

2. Schneideinheit (1; 1*) nach Anspruch 1,
**dadurch gekennzeichnet,**
**dass** die lineare Bahn (b) in einer Richtung zumindest im Wesentlichen quer zu einer Erstreckung der Schneidunterlage (4) oder einer Schneidkante der Klinge (2) führt.

3. Schneideinheit (1; 1*) nach Anspruch 1 oder 2,
**dadurch gekennzeichnet,**
**dass** die Schneidunterlage (4) aus einem weichen Material ausgebildet ist oder zumindest eine weiche Oberfläche aufweist.

4. Schneideinheit (1; 1*) nach einem vorstehenden Anspruch,
**dadurch gekennzeichnet,**
**dass** die verstellbare Komponente Bestandteil einer Hebelanordnung, insbesondere Kniehebelanordnung (6) ist.

5. Schneideinheit (1; 1*) nach einem vorstehenden Anspruch,
**dadurch gekennzeichnet,**
**dass** die verstellbare Komponente ein gegenüber dem Befestigungspunkt verstellbares Antriebselement eines Antriebs ist, der die Klinge (2) und/oder die Schneidunterlage (4) gegenüber dem Befestigungspunkt direkt antreibt.

6. Schneideinheit (1; 1*) nach einem vorstehenden Anspruch,
**dadurch gekennzeichnet,**
**dass** die Klinge (2) und/oder die Schneidunterlage (4) mittels einer Schwung-Antriebseinrichtung verstellbar ist.

7. Schneideinheit (1; 1*) nach einem vorstehenden Anspruch,
**dadurch gekennzeichnet,**
**dass** die Klinge (2) und/oder die Schneidunterlage (4) mittels einer Impuls-Antriebseinrichtung verstellbar ist.

8. Schneideinheit (1; 1*) nach einem vorstehenden Anspruch,
**dadurch gekennzeichnet,**
**dass** eine Halteeinrichtung (17) an der Schneideinheit (1; 1*), insbesondere an einer die Klinge (2) und/oder die Schneidunterlage (4) verstellenden Komponente angeordnet ist, während des Trennens eine zu durchtrennende Faser (3) benachbart zu der Klinge (2) und/oder zu der Schneidunterlage (4) zu halten.

9. Schneideinheit (1; 1*) nach einem vorstehenden Anspruch,
**dadurch gekennzeichnet,**
**dass** eine Halteeinrichtung (20) an der Schneideinheit (1; 1*) angeordnet ist, eine zu durchtrennende Faser (3) während des Trennens und nach dem Trennen in einer definierten Lage zu halten.

10. Vorrichtung (30) zur Herstellung von Faservorformlingen, die insbesondere eine Vorstufe bei der Herstellung von faserverstärkten Kunststoff-Bauteilen darstellen, wobei die Vorrichtung zumindest eine Abwickelstation (31) und zumindest eine Garnübergabestelle (32) für die Bereitstellung zumindest einer Faser (3) und zumindest einen Greifer (16), der einzelne oder mehrere Fasern an ihrem Anfang greifen kann, und zumindest eine Trenneinrichtung zum Trennen der zumindest einen Faser (3) aufweist,
**dadurch gekennzeichnet,**
**dass** die zumindest eine Trenneinrichtung zumindest eine Schneideinheit (1; 1*) nach einem vorstehenden Anspruch ist oder aufweist.

11. Vorrichtung (30) nach Anspruch 10,
**dadurch gekennzeichnet,**
**dass** die Vorrichtung mehrere solche Abwickelstationen (31) für die Bereitstellung mehrerer Fasern, insbesondere Garne oder Rovings und mehrere Greifer (16), die jeweils einzelne oder mehrere Garne oder Rovings an ihrem Anfang greifen können, aufweist, wobei jeder Greifer (16) auf einem Pfad zwischen einer Maximalposition und einer Abholposition hin und her bewegbar ist, wobei die Abholposition an der Garnübergabestelle (32) vorgesehen ist und näher an der Abwickelstation (31) ist als die Maximalposition, wobei jeder Greifer (16) eine eigene Maximalposition hat und einer eigenen Garnübergabestelle (32) zugeordnet ist und wobei die Greifer (16) jeweils einzeln auf im Wesentlichen zueinander parallelen Pfaden bewegbar sind.

12. Vorrichtung (30) nach Anspruch 10 oder 11,
**dadurch gekennzeichnet,**
**dass** die zumindest eine Schneideinheit (1; 1*) zum Trennen der zumindest einen Faser (3), Garne oder Rovings zwischen einem Formwerkzeug (33, 35) und dem zumindest einen Greifer (16) angeordnet ist und/oder die zumindest eine Schneideinheit (1; 1*) zum Trennen der zumindest einen Faser (3), Garne oder Rovings zwischen einem Formwerkzeug (33, 35) und der zumindest einen Garnübergabestellen (32) angeordnet ist.

## Claims

1. Cutting unit (1; 1*) comprising a blade (2) for cutting at least one fibre (3), in particular for producing fibre preforms which represent, in particular, a preliminary stage in the production of fibre-reinforced plastics material components, furthermore comprising a guide device and a cutting base, wherein
the guide device (5) is arranged to guide at least one of the blade (2) and the cutting base (4), which is movable relative to the blade (2), along a linear path (b) for cutting,
**characterized**
**in that** the blade (2) and/or the cutting base (4) is fixed so as to be adjustable in relation to a fastening point (8) by means of a drive arrangement and the guide device (5) guides a component of the drive arrangement, said component being adjustable between the fastening point (8) and the blade (2) and/or the cutting base (4), in such a manner along a guide path with a predetermined path progression that the blade (2) and/or the cutting base (4) is adjustable only along the linear path (b).

2. Cutting unit (1; 1*) according to Claim 1,
**characterized**
**in that** the linear path (b) leads in a direction at least substantially transverse to an extension of the cutting base (4) or to a cutting edge of the blade (2).

3. Cutting unit (1; 1*) according to Claim 1 or 2,
**characterized**
**in that** the cutting base (4) is realized from a soft material or at least comprises a soft surface.

4. Cutting unit (1; 1*) according to a preceding claim,
**characterized**
**in that** the adjustable component is a component part of a lever arrangement, in particular a toggle lever arrangement (6).

5. Cutting unit (1; 1*) according to a preceding claim,
**characterized**
**in that** the adjustable component is a drive element, which is adjustable in relation to the fastening point, of a drive which drives the blade (2) and/or the cutting base (4) directly in relation to the fastening point.

6. Cutting unit (1; 1*) according to a preceding claim,
**characterized**
**in that** the blade (2) and/or the cutting base (4) is adjustable by means of a momentum drive device.

7. Cutting unit (1; 1*) according to a preceding claim,
**characterized**
**in that** the blade (2) and/or the cutting base (4) is adjustable by means of a pulse drive device.

8. Cutting unit (1; 1*) according to a preceding claim,
**characterized**
**in that** a holding device (17) is arranged on the cutting unit (1; 1*), in particular on a component adjusting the blade (2) and/or the cutting base (4) in order to hold a fibre (3) to be cut through adjacent to the blade (2) and/or to the cutting base (4) during cutting.

9. Cutting unit (1; 1*) according to a preceding claim,
**characterized**
**in that** a holding device (20) is arranged on the cutting unit (1; 1*) in order to hold a fibre (3) to be cut through in a defined position during cutting and after cutting.

10. Device (30) for producing fibre preforms which represent, in particular, a preliminary stage in the production of fibre-reinforced plastics material components, wherein the device comprises at least one unwinding station (31) and at least one yarn transfer point (32) for the provision of at least one fibre (3) and at least one gripper (16), which can grip individual or multiple fibres at their beginning, and at least one cutting device for cutting the at least one fibre (3),
**characterized**
**in that** the at least one cutting device is or comprises at least one cutting unit (1; 1*) according to a preceding claim.

11. Device (30) according to Claim 10,
**characterized**
**in that** the device comprises multiple such unwinding stations (31) for the provision of multiple fibres, in particular yarns or rovings, and multiple grippers (16) which can grip in each case individual or multiple yarns or rovings at their beginning, wherein each gripper (16) is movable to and fro along a path between a maximum position and a pick-up position, wherein the pick-up position is provided at the yarn transfer point (32) and is closer to the unwinding station (31) than the maximum position, wherein each gripper (16) has its own maximum position and is assigned to its own yarn transfer point (32) and wherein the grippers (16) are each movable individually along paths which are substantially parallel to one another.

12. Device (30) according to Claim 10 or 11,
**characterized**
**in that** the at least one cutting unit (1; 1*) for cutting the at least one fibre (3), yarns or rovings is arranged between a mould (33, 35) and the at least one gripper (16) and/or the at least one cutting unit (1; 1*) for cutting the at least one fibre (3), yarns or rovings is arranged between a mould (33, 35) and the at least one yarn transfer point (32).

## Revendications

1. Unité de coupe (1 ; 1*) comprenant une lame (2) destinée à couper au moins une fibre (3), en particulier en vue de la production de préformes fibreuses qui représentent notamment une étape préliminaire dans la production de composants en matière synthétique renforcés de fibres, et comprenant en outre un moyen de guidage et une base de coupe,
le moyen de guidage (5) étant disposé de façon à guider l'une au moins parmi la lame (2) et la base de coupe (4) déplaçable par rapport à la lame (2) afin d'effectuer la coupe le long d'un chemin linéaire (b),
**caractérisée en ce que**
la lame (2) et/ou la base de coupe (4) sont fixées de manière réglable par rapport à un point de fixation (8) à l'aide d'un ensemble d'entraînement et le moyen de guidage (5) guide un composant de l'ensemble d'entraînement, qui est réglable entre le point de fixation (8) et la lame (2) et/ou la base de coupe (4), le long d'un chemin de guidage ayant une allure prédéterminée de sorte que la lame (2) et/ou la base de coupe (4) ne puissent être réglées que le long du chemin linéaire (b).

2. Unité de coupe (1 ; 1*) selon la revendication 1,
**caractérisée en ce que**
le chemin linéaire (b) s'étend dans une direction au moins sensiblement transversale à une extension de la base de coupe (4) ou à un bord de coupe de la lame (2).

3. Unité de coupe (1 ; 1*) selon la revendication 1 ou 2,
**caractérisée en ce que**
la base de coupe (4) est en un matériau souple ou comporte au moins une surface souple.

4. Unité de coupe (1; 1*) selon l'une des revendications précédentes,
**caractérisée en ce que**
le composant réglable fait partie d'un ensemble de levier, en particulier d'un ensemble de levier à genouillère (6).

5. Unité de coupe (1; 1*) selon l'une des revendications précédentes,
**caractérisée en ce que**
le composant réglable est un élément d'entraînement, réglable par rapport au point de fixation, d'un entraînement qui entraîne la lame (2) et/ou la base de coupe (4) directement par rapport au point de fixation.

6. Unité de coupe (1; 1*) selon l'une des revendications précédentes,
**caractérisée en ce que**
la lame (2) et/ou la base de coupe (4) peuvent être réglées à l'aide d'un moyen d'entraînement en oscillations.

7. Unité de coupe (1; 1*) selon l'une des revendications précédentes,
**caractérisée en ce que**
la lame (2) et/ou la base de coupe (4) peuvent être réglées à l'aide d'un moyen d'entraînement à impulsions.

8. Unité de coupe (1; 1*) selon l'une des revendications précédentes,
**caractérisée en ce que**
un moyen de retenue (17) est disposé sur l'unité de coupe (1; 1*), en particulier sur un composant qui règle la lame (2) et/ou la base de coupe (4), pour maintenir une fibre (3) pendant le sectionnement de manière adjacente à la lame (2) et/ou à la base de coupe (4).

9. Unité de coupe (1; 1*) selon l'une des revendications précédentes,
**caractérisée en ce que**
un moyen de retenue (20) est disposé sur l'unité de coupe (1; 1*) pour maintenir une fibre (3) à sectionner dans une position définie pendant le sectionnement et après le sectionnement.

10. Dispositif (30) destiné à la production de préformes fibreuses, qui représentent notamment une étape préliminaire dans la production de composants en matière synthétique renforcée de fibres, le dispositif comportant au moins un poste de déroulement (31) et au moins un point de transfert de fil (32) destiné à fournir au moins une fibre (3) et au moins un élément de préhension (16), qui peut saisir une ou plusieurs fibres au niveau de leur partie initiale, et au moins un moyen de sectionnement destiné à sectionner l'au moins une fibre (3),
**caractérisé en ce que**
l'au moins un moyen de coupe est ou comporte au moins une unité de coupe (1; 1*) selon une revendication précédente.

11. Dispositif (30) selon la revendication 10,
**caractérisé en ce que**
le dispositif comporte plusieurs postes de déroulement (31) destinés à fournir plusieurs fibres, notamment des fils ou des mèches, et plusieurs éléments de préhension (16) qui peuvent chacun saisir un ou plusieurs fils ou une ou plusieurs mèches au niveau de leur partie initiale, chaque élément de préhension (16) étant mobile suivant un mouvement alternatif sur un chemin situé entre une position maximale et une position de prise, la position de prise étant prévue au point de transfert de fil (32) et étant plus proche du poste de déroulement (31) que la position maximale, chaque élément de préhension (16) ayant sa propre position maximale et étant associé à son propre point de transfert de fil (32) et les éléments de préhension (16) pouvant chacun être déplacés individuellement sur des chemins qui sont sensiblement parallèles les uns aux autres.

12. Dispositif (30) selon la revendication 10 ou 11,
**caractérisé en ce que**
l'au moins une unité de coupe (1; 1*) destinée à sectionner l'au moins une fibre (3), des fils ou des mèches est disposée entre un outil de moulage (33, 35) et l'au moins un élément de préhension (16) et/ou l'au moins une unité de coupe (1 ; 1*) destinée à sectionner l'au moins une fibre (3), des fils ou des mèches est disposée entre un outil de moulage (33, 35) et l'au moins un point de transfert de fil (32).
